## Europäisches Patentamt

## European Patent Office

## Office européen des brevets

(11) Veröffentlichungsnummer: **0 056 127**
**A2**

(19)

# (12) EUROPÄISCHE PATENTANMELDUNG

(21) Anmeldenummer: **81110453.8**

(22) Anmeldetag: **15.12.81**

(51) Int. Cl.³: **H 05 B 7/085, H 05 B 7/14**

(30) Priorität: **14.01.81 DE 3100921**

(43) Veröffentlichungstag der Anmeldung: **21.07.82**
**Patentblatt 82/29**

(84) Benannte Vertragsstaaten: **AT BE CH DE FR GB IT LI LU NL SE**

(71) Anmelder: **C. CONRADTY NÜRNBERG GmbH & Co KG, Grünthal 1-6, D-8505 Röthenbach a.d. Pegnitz (DE)**

(72) Erfinder: **Rittmann, Friedrich, Am Buck 18, D-8501 Rückersdorf b.Nürnberg (DE)**
Erfinder: **Zöllner, Dieter H., Dr., Händelstrasse 19, D-8501 Schwaig b. Nürnberg (DE)**

(74) Vertreter: **Füchsle, Klaus, Dipl.-Ing. et al, Hoffmann. Eitle & Partner Patentanwälte Arabellastrasse 4, D-8000 München 81 (DE)**

(54) **Elektrode, insbesondere für Lichtbogenöfen oder die Schmelzflusselektrolyse.**

(57) Eine derartige Elektrode besteht aus mehreren, über Kontaktflächen (21a, 22a) elektrisch miteinander verbundenen Elektrodenabschnitten (21, 22).

Um einen guten elektrischen Kontakt zwischen den Kontaktflächen zweier benachbarter Elektrodenabschnitte auch in den Fällen zu sichern, in denen sich aufgrund von Bearbeitungstoleranzen in der Verbindung selbst bzw. durch die Ausbildung der Kontaktflächen der Elektrodenabschnitte eine ungenügende Kontaktierung der Kontaktflächen dieser Elektrodenabschnitte mit der Folge eines unzulässig hohen elektrischen Übergangswiderstands ergeben würden, weist mindestens eine der Kontaktflächen (21a, 22a) zweier benachbarter Elektrodenabschnitte (21, 22) in Richtung auf die andere Kontaktfläche vorspringende Flächenbereiche (52) auf, die im verbundenen Zustand der Elektrodenabschnitte in Kontakt mit der anderen Kontaktfläche liegen.

EP 0 056 127 A2

## Elektrode, insbesondere für Lichtbogenöfen oder die Schmelzflußelektrolyse

Die Erfindung betrifft eine Elektrode, insbesondere für Lichtbogenöfen oder die Schmelzflußelektrolyse, bestehend aus mehreren, über Kontaktflächen elektrisch miteinander verbundenen Elektrodenabschnitten.

Elektroden dieser Art bestehen entweder insgesamt aus miteinander verbundenen aktiven Elektrodenabschnitten aus Grafit oder sind als sogenannte formstabile Elektroden ausgebildet, die dadurch gekennzeichnet sind, daß der obere Teil der Elektrode aus einem metallischen, flüssigkeitsgekühlten Schaft besteht, während der untere Abschnitt durch einen ersetzbaren Aktivteil aus sich verbrauchendem Material, insbesondere ebenfalls Grafit, gebildet ist. Sowohl bei der Verbindung von Aktivteilen aus sich verbrauchendem Material untereinander als auch bei der Verbindung eines Aktivteils mit dem metallischen Schaft bei formstabilen bzw. Kombinationselektroden kommt es darauf an, die Kontaktflächen zweier benachbarter Elektrodenabschnitte in innigen mechanischen Kontakt miteinander zu bringen, um den elektrischen Übergangswiderstand zwischen den Kontaktflächen zweier benachbarter Elektrodenabschnitte so gering wie möglich zu halten.

Bislang haben sich in erster Linie Schraubverbindungen zwischen den Elektrodenabschnitten, sei es zwischen den Aktivteilen untereinander oder zwischen einem Aktivteil und einem metallischen Schaft, durchgesetzt. Hierfür weisen die

0056127

beiden miteinander zu verbindenden Elektrodenabschnitte an ihren Stirnflächen je eine Gewindebohrung auf, in die ein Schraubnippel mit einem Außengewinde eingeschraubt wird. Sowohl Gewindebohrung als auch Schraubnippel können zylindrisch oder konisch geformt sein. Der Schraubnippel besteht vorzugsweise aus demselben Material wie der Aktivteil, d.h. in erster Linie aus Grafit.

Für derartige Schraubverbindungen sind spezielle Gewinde entwickelt worden. Diese Gewinde sind nicht nur an das Material der Aktivteile bzw. der Schraubnippel angepaßt, sondern sollen auch den gegebenen mechanischen und elektrischen Bedingungen Rechnung tragen. Um die beiden Elektrodenabschnitte trotz der großen mechanischen Belastungen, die sich beim Einfahren der Elektroden, z.B. in Lichtbogenöfen, durch Schrottversetzungen, d.h. durch die in die Schmelze einrutschenden Schrotteile und aufgrund der Schwingungen, in die die Elektroden auf elektromagnetische Weise versetzt werden, ergeben, sicher zu verbinden, muß das Gewinde möglichst weitgehend selbsthemmend sein. Es muß darüber hinaus gute elektrische Kontaktflächen bilden, da ein nicht unerheblicher Teil des Stromes über den Schraubnippel verläuft. Um darüber hinaus die Kontaktflächen zweier benachbarter Elektrodenabschnitte, unter einem vorgegebenen Flächendruck, in inniger Verbindung zu halten, damit sich ein guter elektrisch leitender Übergang zwischen diesen Kontaktflächen ergibt, sind Tabellen entwickelt worden, die angeben, mit welchem Drehmoment im Einzelfall die Schraubnippel angezogen werden müssen.

Trotz dieser sehr weit vorangetriebenen Technologie der Verbindung von benachbarten Elektrodenabschnitten ist nicht in allen Fällen ausreichend gewährleistet, daß die Kontaktflächen zweier benachbarter Elektrodenabschnitte tatsächlich in einen derartig innigen Kontakt gelangen, daß der elektrische Übergangswiderstand zwischen zwei aneinanderliegenden Kontaktflächen möglichst gering wird. Unvermeidli-

che Toleranzen in der Schraubverbindung können nämlich die Folge haben, daß zwei benachbarte Elektrodenabschnitte nicht achsgleich liegen mit der Folge, daß die beiden Kontaktflächen nur bereichsweise zur gegenseitigen Anlage gelangen. Diese Konfiguration ergibt sich auch dann, wenn schon eine der Kontaktflächen nicht genau senkrecht zur Achse verläuft oder in sich uneben ist. In sämtlichen dieser Fälle tritt zumindest bereichsweise zwischen den Kontaktflächen ein mehr oder weniger großer Spalt auf, der den elektrischen Gesamtübergangswiderstand zwischen den Kontaktflächen zweier benachbarter Elektroden erheblich vergrößern kann.

Demgegenüber ist es Aufgabe der Erfindung, eine Lösung vorzuschlagen, die einen guten elektrischen Kontakt zwischen den Kontaktflächen zweier benachbarter Elektrodenabschnitte sichert, und zwar auch in den Fällen, in denen sich aufgrund von Bearbeitungstoleranzen in der Verbindung selbst bzw. durch die Ausbildung der Kontaktflächen der Elektrodenabschnitte eine ungenügende Kontaktierung der Kontaktflächen dieser Elektrodenabschnitte mit der Folge eines unzulässig hohen elektrischen Übergangswiderstands ergeben würde.

Diese Aufgabe wird bei einer Anordnung der vorausgesetzten Art dadurch gelöst, daß mindestens eine der Kontaktflächen zweier benachbarter Elektrodenabschnitte in Richtung auf die andere Kontaktfläche vorspringende Flächenbereiche aufweist, die im verbundenen Zustand der Elektrodenabschnitte in Kontakt mit der anderen Kontaktfläche liegen.

Die erfindungsgemäß von mindestens einer der Kontaktflächen zweier benachbarter Elektrodenabschnitte vorspringenden Flächenbereiche sorgen dafür, daß ein eventuell aufgrund der geschilderten Toleranzen entstehender Spalt zwischen den Kontaktbereichen durch vorspringende Flächenbereiche überbrückt wird. Aufgrund der vorspringenden Flächenbereiche kann die damit ausgestattete Kontaktfläche besser an die andere Kontaktfläche angepaßt werden, als bei nur beiderseitigen planen Kontaktflächen. Durch diese erfindungsgemäße Lösung wird also stets sichergestellt, daß die Kontaktflächen zweier benachbarter Elektrodenabschnitte in einen innigen elektrischen Kontakt gelangen mit dem Vorteil der Erzielung eines niedrigen elektrischen Übergangswiderstands. Dadurch können erhebliche Energiekosten auf einfache Weise eingespart werden. Die erfindungsgemäß ausgebildeten Kontaktflächen können sowohl an den Aktivteilen aus sich verbrauchendem Material als auch an den Kontaktflächen der Metallschäfte von Kombinations-Elektroden vorgesehen werden.

Die erfindungsgemäßen, vorspringenden Flächenbereiche an einer derartigen Kontaktfläche können relativ einfach hergestellt werden. Bei den Aktivteilen kann dies schon während des Formungsvorgangs, d.h. ohne zusätzlichen Arbeitsgang, erfolgen. Bei metallischen Kontaktflächen können die vorspringenden Flächenbereiche durch z.B. spanabhebende Methoden, wie Fräsen oder dergleichen, ausgebildet werden.

Die erfindungsgemäß ausgebildeten Kontaktflächen können bei jeder beliebigen Verbindungsart der Elektrodenabschnitte untereinander eingesetzt werden. Dies gilt sowohl für Schraubverbindungen als auch für Klemmverbindungen, die neuerdings angewandt werden zur Verbindung des Metallschafts und des Aktivteils bei Kombinationselektroden.

Zweckmäßige Ausgestaltungen der erfindungsgemäßen Elektroden ergeben sich aus den übrigen Patentansprüchen.

Danach besteht eine vorteilhafte Ausführungsform darin, die Elektrode derart auszubilden, daß im verbundenen Zustand von Elektrodenabschnitten die vorspringenden Flächenbereiche der Kontaktfläche der einen Elektrode in das Material der Kontaktfläche der anderen Elektrode eingedrungen sind. Aufgrund dieser Maßnahme arbeiten sich die vorspringenden Flächenbereiche der Kontaktfläche der einen Elektrode geringfügig in das Material der Kontaktfläche der anderen Elektrode ein, wodurch ein besonders inniger Kontakt erreicht wird.

Dieser innige Kontakt kann noch dadurch verbessert werden, daß sich nach einer weiteren Ausgestaltung im verbundenen Zustand von Elektrodenabschnitten die vorspringenden Flächenbereiche der Kontaktfläche unter dem Anpreßdruck zwischen den Kontaktflächen plastisch verformen. Durch die plastische Verformung werden die Flächen- und damit die Stromübertragungsbereiche vergrößert. Durch die Vergrößerung der Kontaktflächen wird eine Verkleinerung der spezifischen elektrischen Spannungsbelastung und eine Verringerung des Spannungsabfalls an der Übergangszone erreicht.

Um diese gewollte plastische Verformung der vorspringenden Flächenbereiche der Kontaktfläche eines Elektrodenabschnittes zu erreichen, können zumindest die die vorspringenden Flächenbereiche darstellenden Teile der Kontaktfläche aus einem plastisch verformbaren Material, z.B. Metall bzw. einer Metallegierung, bestehen.

Eine grundsätzlich andere Ausführungsform der erfindungsgemäßen Elektrode besteht darin, daß sich im verbundenen Zustand von Elektrodenabschnitten die vorspringenden Flächenbereiche der Kontaktfläche elastisch verformen. Diese elastische Verformung der vorspringenden Flächenbereiche der Kontaktfläche zumindest eines Elektrodenabschnitts kann erzielt werden durch die Wahl eines elektrisch leitenden elastischen Werkstoffs für die Kontaktfläche bzw. durch die Formeigenschaften der vorspringenden Flächenbereiche selbst.

Der letztgenannte Effekt ist von Vorteil dadurch zu erzielen, daß die vorspringenden Flächenbereiche durch aus dem Werkstoff der Kontaktfläche teilweise herausgeschnittene und/oder aus der Hauptebene der Kontaktfläche herausgeprägte bzw. herausgebogene runde oder eckige Noppen, Lamellen, Stege oder dergleichen gebildet sind. Aufgrund dieser Formgebung der vorspringenden Flächenbereiche verformen sich diese elastisch aufgrund des üblichen Anpreßdruckes zwischen den Kontaktflächen zweier benachbarter Elektrodenabschnitte.

Es ist grundsätzlich möglich, die geschilderten Kontaktflächenausbildungen unmittelbar an den Elektrodenabschnitten, entweder den Aktivteilen oder den Metallschäften oder beiden, anzubringen.

Es ist grundsätzlich aber auch möglich, daß zwischen den Kontaktflächen zweier benachbarter Elektrodenabschnitte ein aus einem elektrisch leitenden Material bestehendes Element z.B. in Form einer Scheibe oder dergleichen angeordnet ist, das zumindest auf einer der Kontaktflächen der Elektrodenabschnitte zugewandten Fläche die vorspringenden Flächenbereiche aufweist.

In diesem Fall ist also ein separates Element vorgesehen, das sich aber aus fertigungstechnischen Gründen anbieten kann, wenn man eine entsprechende direkte Bearbeitung der Elektrodenabschnitte selbst aus irgendwelchen Gründen vermeiden will.

Eine zweckmäßige Ausgestaltung dieses separaten Kontaktelements besteht darin, daß das Element auf beiden den Kontaktflächen von zwei benachbarten Elektrodenabschnitten zugewandten Flächen vorspringende Flächenabschnitte in Form von flexiblen Noppen, Lamellen oder Stege oder dergleichen besitzt.

Die erfindungsgemäße Lösung ist dadurch charakterisiert, daß sich die vorspringenden Flächenbereiche zumindest einer Kontaktfläche aufgrund des normalerweise gegebenen Anpreßdruckes zwischen den Kontaktflächen zweier benachbarter Elektrodenabschnitte innig an die andere Kontaktfläche anlegen, so daß zumindest über größere Bereiche der Kontaktflächen Spalte vermieden sind, die eine drastische Erhöhung des elektrischen Übergangswiderstands ergeben würden. Vielmehr ist mit der erfindungsgemäßen Lösung erreicht, den Spannungsabfall zwischen zwei benachbarten Elektrodenabschnitten so klein wie möglich zu halten. Dadurch kann eine erhebliche Erhöhung des Wirkungsgrades der erfindungsgemäßen Elektrode erzielt werden mit der Folge einer durch einfache Mittel erreichten Energieeinsparung.

Weitere Vorteile und Einzelheiten der erfindungsgemäßen Elektrode werden anhand eines Ausführungsbeispiels unter Bezugnahme auf die Zeichnungen erläutert, in denen zeigt:

Fig. 1 einen Achsschnitt durch die wesentlichen Bauteile einer erfindungsgemäßen Elektrode,

Fig. 2 eine Vergrößerung der Einzelheit A in Fig. 1,

Fig. 3 eine Draufsicht auf eine erfindungsgemäß ausgebildete Kontaktscheibe, und

Fig. 4 einen Schnitt durch die Kontaktscheibe nach Fig. 3 entsprechend der Schnittlinie IV-IV.

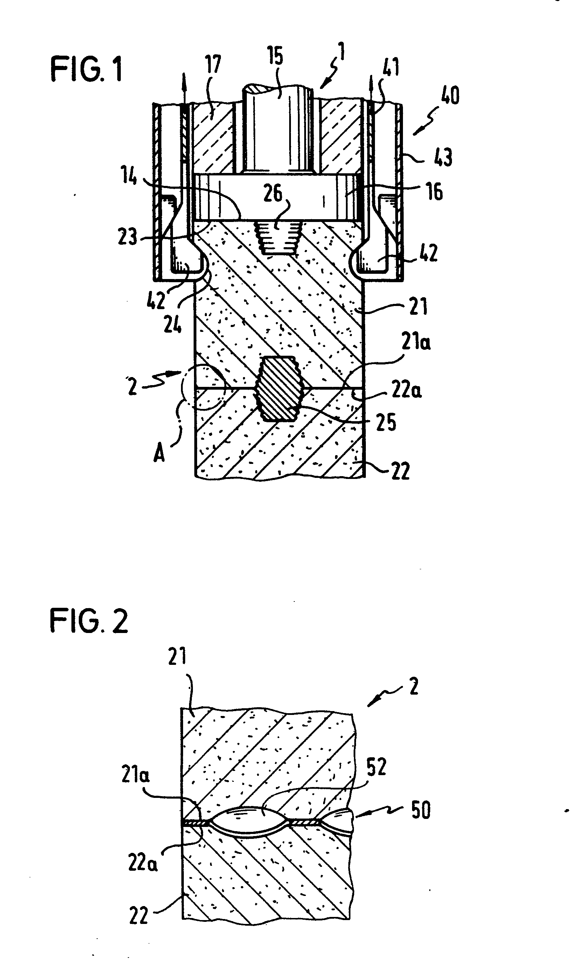

Die Fig. 1 zeigt die wesentlichen Bauteile einer sogenannten Kombinationselektrode. Diese besteht aus einem insgesamt mit 1 bezeichneten metallischen und flüssigkeitsgekühlten Schaft. Das stromführende Bauteil des Schafts ist als Vollstab 15 ausgebildet, der an seinem unteren Ende in eine Kontaktplatte 16 übergeht. Zum Schutz des Vollstabs 15 gegenüber thermischen und mechanischen Einflüssen ist dieser von einem eventuell gekühlten Schutzrohr 17 aus einem

0056127

billigeren Material als dem des stromführenden Bauteils 15, 16 umgeben.

Der Aktivteil der Elektrode ist insgesamt mit 2 bezeichnet. Er besteht aus zwei Elektrodenabschnitten, die in üblicher Weise mittels eines Schraubnippels 25 miteinander verschraubt sind. Mit 26 ist eine Gewindebohrung des oberen Abschnitts des Aktivteils 2 bezeichnet, die dazu vorgesehen ist, diesen Abschnitt gegebenenfalls an das untere Ende einer teilweise verbrauchten Elektrode anzuschrauben.

Die Verbindung zwischen dem Schaft 1 und dem Aktivteil 2 erfolgt über eine insgesamt mit 40 bezeichnete Klemmvorrichtung, die den Schaft 1 umgibt. Diese Klemmvorrichtung 40 umfaßt eine Klemmhülse 41, die an ihrem unteren Ende Klemmbacken 42 mit daran ausgebildeten Klemmflächen aufweist. Die Klemmbacken 42 der Klemmhülse 41 können separate Elemente darstellen oder durch entsprechende Längsschlitze in der Klemmhülse 41 erzeugt sein. Es kommt lediglich darauf an, daß die Klemmbacken 42 radial beweglich sind.

Die Klemmhülse 41 ist konzentrisch umgeben von einem Rohr 43, an dessen Innenseite im Bereich der Klemmbacken 42 Keilflächen angeordnet sind, die mit Keilflächen der Klemmbacken 42 zusammenwirken. Am oberen Ende des oberen Abschnitts des Aktivteils 2 ist in der Mantelfläche eine Umfangsnut 24 ausgebildet, in die gemäß der Darstellung die Klemmbacken 42 eingreifen. Um dies zu ermöglichen, sind die Klemmhülse 41 und das äußere Rohr 43 axial relativ zueinander beweglich. Werden die Klemmhülse 41 und das Rohr 43 auseinanderbewegt, gelangen die Klemmflächen der Klemmhülse 41 einerseits und des Rohrs 43 andererseits außer Eingriff, wodurch sich die Klemmbacken 42 radial nach außen bewegen können. In dieser Stellung der Klemmbacken 42 kann das obere Ende des Aktivteils 2 zwischen diese eingeschoben werden.

Beim Zusammenschieben der Klemmhülse 41 und des Rohrs 43 gelangen die geschilderten Klemmflächen in Eingriff, wodurch die Klemmbacken 42 radial nach innen bewegt werden, bis ihre Klemmflächen in Anlage mit der oberen Wandungsfläche der Umfangsnut 24 des Aktivteils 2 gelangen. Danach werden die Klemmhülse 41 und das Rohr 43 gemeinsam nach oben bewegt, wodurch die stirnseitige Kontaktfläche 23 des Aktivteils 2 mit der Kontaktfläche 14 des stromführenden Bauteils 15, 16 des Schafts 1 in Anlage gelangt.

Wie bereits erwähnt, besteht der Aktivteil 2 der Elektrode aus mehreren Elektrodenabschnitten, wobei in Fig. 1 zwei Elektrodenabschnitte gezeigt sind, die mit 21 und 22 bezeichnet sind. Diese Elektrodenabschnitte 21 und 22 stehen über ihre Kontaktflächen 21a und 22a miteinander in elektrisch leitender Verbindung.

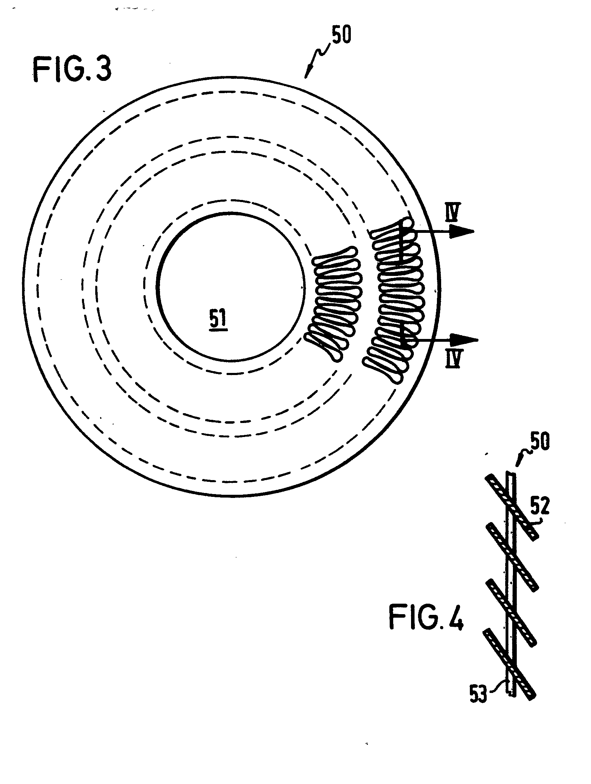

Um diese elektrisch leitende Verbindung zu verbessern, ist zwischen die Kontaktflächen 21a und 22a der Elektrodenabschnitte 21 und 22 ein insgesamt mit 50 bezeichnetes Kontaktelement eingelegt. Die nähere Ausbildung dieses Kontaktelements 50 ergibt sich aus den Fig. 3 und 4. Danach besteht das Kontaktelement 50 aus einer relativ dünnen Scheibe aus elektrisch leitfähigem Werkstoff. Der Außendurchmesser der Scheibe entspricht in etwa dem Außendurchmesser der Elektrodenabschnitte 21 und 22. Sie weist eine zentrale Bohrung 51 auf, die in der Montagestellung durch den Schraubnippel 25 durchsetzt wird. Aus der Scheibe sind in zwei konzentrischen Ringen radial verlaufende, messerartige Lamellen 52 ausgeschnitten, die aus der Hauptebene 53 der Scheibe zu beiden Seiten derselben hin vorspringend herausgebogen sind. Diese Lamellen 52 bilden danach vorspringende Flächenbereiche. Diese vorspringenden Flächenbereiche in Gestalt der Lamellen 52 sind aufgrund der geschilderten Formgebung unter axialem Druck auf das scheibenförmige Element 50 elastisch verformbar.

Dadurch graben sich die lamellenartigen, vorspringenden Flächenbereiche 52 des Kontaktelements 50 zum einen teilweise in das Material der Kontaktflächen 21a und 22a der Elektrodenabschnitte 21 und 22 ein und werden zum anderen elastisch verformt. Beide Maßnahmen werden durch den üblichen Anpreßdruck zwischen den zwei Kontaktflächen 21a und 22a der Elektrodenabschnitte 21 und 22 erreicht. Dieser Anpreßdruck wird erzeugt und ist einstellbar durch entsprechendes Anziehen der beiden Elektrodenabschnitte 21 und 22 über den Schraubnippel 25.

Durch die elastisch verformbaren, vorspringenden Flächenbereiche 52 des Kontaktelements 50 werden aufgrund von Toleranzen in der Gewindeverbindung zwischen den beiden Elektrodenabschnitten 21 und 22 und/oder der Planheit bzw. axialen Ausrichtung der Kontaktflächen 21a und 22a entstehende Spalte zwischen den Kontaktflächen 21a und 22a überbrückt, wodurch der ansonsten aufgrund dieser zumindest bereichsweise auftretenden Spalte zwischen den beiden Kontaktflächen hervorgerufene Spannungsabfall vermieden ist mit der Folge der Erzielung eines niedrigen elektrischen Übergangswiderstandes zwischen zwei benachbarten Elektrodenabschnitten.

Ein entsprechend ausgebildetes Kontaktelement kann natürlich auch zwischen der oberen Kontaktfläche 23 des Aktivteils 2 und der Kontaktfläche 14 des stromführenden Bauteils 15, 16 des Metallschafts 1 der Elektrode eingelegt sein.

Es ist aber auch möglich, der Kontaktfläche 14 des stromführenden Bauteils 15, 16 des Schafts 1 eine Oberfläche zu verleihen, die vorspringende Flächenbereiche der geschilderten Art aufweist, um auf diese Weise den elektrischen Kontakt zwischen dem Schaft 1 und dem Aktivteil 2

0056127

einer derartigen Elektrode zu verbessern.

Selbstverständlich kann das Kontaktelement 50 auch anders ausgebildet sein. Es können runde, quadratische oder sonstwie geformte Ausprägungen, Ausbiegungen oder dergleichen oder geradlinig oder gekrümmt verlaufende halbschalenförmige oder sonstwie geformte Riefen oder dergleichen vorgesehen sein.

## Patentansprüche

1. Elektrode, insbesondere für Lichtbogenöfen oder die Schmelzflußelektrolyse, bestehend aus mehreren über Kontaktflächen elektrisch miteinander verbundenen Elektrodenabschnitten, dadurch gekennzeichnet, daß mindestens eine der Kontaktflächen zweier benachbarter Elektrodenabschnitte in Richtung auf die andere Kontaktfläche vorspringende Flächenbereiche aufweist, die im verbundenen Zustand der Elektrodenabschnitte in Kontakt mit der anderen Kontaktfläche liegen.

2. Elektrode nach Anspruch 1, dadurch gekennzeichnet, daß im verbundenen Zustand von Elektrodenabschnitten die vorspringenden Flächenbereiche der Kontaktfläche der einen Elektrode in das Material der Kontaktfläche der anderen Elektrode eingedrungen sind.

3. Elektrode nach Anspruch 1 oder 2, dadurch gekennzeichnet, daß sich im verbundenen Zustand von Elektrodenabschnitten die vorspringenden Flächenbereiche der Kontaktfläche unter dem Anpreßdruck zwischen den Kontaktflächen plastisch verformen.

4. Elektrode nach Anspruch 3, dadurch gekennzeichnet, daß zumindest die die vorspringenden Flächenbereiche darstellenden Teile der Kontaktfläche aus einem plastisch verformbaren Material, z.B. Metall bzw. einer Metallegierung, bestehen.

5. Elektrode nach Anspruch 1 oder 2, dadurch gekennzeichnet, daß sich im verbundenen Zustand von Elektrodenabschnitten die vorspringenden Flächenbereiche der Kontaktfläche elastisch verformen.

6. Elektrode nach Anspruch 5, dadurch gekennzeichnet, daß die vorspringenden Flächenbereiche durch aus dem Werkstoff der Kontaktfläche teilweise herausgeschnittene und/oder aus der Hauptebene der Kontaktfläche herausgeprägte bzw. herausgebogene runde oder eckige Noppen, Lamellen, Stege oder dergleichen gebildet sind.

7. Elektrode nach einem der vorhergehenden Ansprüche, dadurch gekennzeichnet, daß zwischen den Kontaktflächen (21a, 22a) zweier benachbarter Elektrodenabschnitte (21, 22) ein aus einem elektrisch leitenden Material bestehendes Element (50) z.B. in Form einer Scheibe oder dergleichen angeordnet ist, das zumindest auf einer der Kontaktflächen (21a, 22a) der Elektrodenabschnitte (21, 22) zugewandten Fläche die vorspringenden Flächenbereiche (52) aufweist.

8. Elektrode nach Anspruch 7, dadurch gekennzeichnet, daß das Element (50) auf beiden den Kontaktflächen (21a, 22a) von zwei benachbarten Elektrodenabschnitten (21, 22) zugewandten Flächen vorspringende Flächenabschnitte in Form von elastisch verformbaren Noppen, Lamellen (52), Stege oder dergleichen besitzt.

FIG. 1

17    15    1    41    40
43
14    26    16
23    42
42    21
24    21a
2    22a
A    25
22

FIG. 2

21    2
21a    52
50
22a
22

0056127

2/2

**FIG.3**

**FIG.4**